# EUROPÄISCHE PATENTSCHRIFT

(11) **EP 1 319 816 B1**
(45) Veröffentlichungstag und Bekanntmachung des Hinweises auf die Patenterteilung: **12.08.2015**
(21) Anmeldenummer: 02450279.1
(22) Anmeldetag: 11.12.2002
(51) Int. Cl.: F02B 47/02, F02M 25/022

(54) **HGIS-Direkteinsprühsystem**
HGIS direct spray system
Système de pulvérisation directe

(30) Priorität: 14.12.2001 AT 19652001
(43) Veröffentlichungstag der Anmeldung: 18.06.2003
(73) Patentinhaber: Auer, Gerhard, 8010 Graz (AT)
(72) Erfinder: Auer, Gerhard, 8010 Graz (AT)

(56) Entgegenhaltungen:
- US-A- 5 582 139
- US-A- 6 010 544

## Beschreibung

Die Erfindung betrifft eine Vorrichtung zur Vergasung eines Kraftstoff Wassergemisches.

Bei der Erfindung handelt es sich um eine Vorrichtung die es erst ermöglich ein Kraftstoff-Wassergemisch zu vergasen und es direkt in die Brennkammer einer Brennkraftmaschine jeder Art zu sprühen.

Vorrichtungen zum Vergasen von Brennstoffen sind z.B. in der US 5,582,139 beschrieben, die einen separaten Verdampfer aufweist. Die US 6,010,544 stellt einen als Ventil ausgebildeten Zylinder dar, wobei die Zufuhr durch eine Hochdruckpumpe erfolgt. Diese Vorrichtungen können jedoch die Probleme mit dem Wasseranteil und daraus entstehenden Tröpfchen nicht lösen.

Die Aufgabe dieser Erfindung ist es daher eine kompakte Vorrichtung zu schaffen welche es erst ermöglicht ein Kraftstoff-Wassergemisch zu vergasen und es mit hohem Druck (Eigendruck) direkt in die Brennkammer einer fremdgezündeten Brennkraftmaschine jeder Art wie Ottomotor, Dieselmotor, Wankelmotor oder Turbinen jeder Bauart zu transportieren.

Die Erfindung betrifft daher eine Vorrichtung gemäß Anspruch 1, mit einem geschlossenen Heizelement, das einen elektrischen Heizwiderstand aufweist und mit einer Kraftstoffeinspritzdüse und einem Magnetventil versehen ist, wobei an das Magnetventil ein

Einlasskanal mit einem Einlassventil und einer Einlassdüse anschließt, wobei die Heizkammer einen Temperaturfühler aufweisen kann.

Eine Weiterbildung der Erfindung ist dadurch gekennzeichnet, dass die Heizkammer einen Druckfühler aufweist.

Eine günstige Ausgestaltung der Erfindung ist dadurch gekennzeichnet, dass im Einlasskanal ein Mengenmesser vorgesehen ist.

Eine vorteilhafte Weiterbildung ist dadurch gekennzeichnet, dass die Einlassdüse in unmittelbarer Nähe der Zündkerze einer Brennkammer einer Brennkraftmaschine wie z.B. Ottomotor, Dieselmotor, Wankelmotor oder einer Turbine mündet.

Eine erfindungsgemäße Ausgestaltung ist dadurch gekennzeichnet, dass der elektrische Heizwiderstand in den Wänden des Heizelementes angeordnet ist.

Alternativ kann der elektrische Heizwiderstand im Innenraum des Heizelementes vorgesehen sein und beispielsweise ein Raster oder Netz bilden.

Günstig ist es, wenn die Vorrichtung aus Edelstahl, Stahl, Leichtmetall oder aus jeder Art von Metalllegierung sowie aus Keramik oder Kalzium besteht.

Besonders vorteilhaft ist es, wenn das Einlassventil durch ein Magnetventil betätigt wird, wobei es auch durch einen Stellmotor betätigt werden kann.

Eine besonders gute Ausgestaltung der Erfindung ist dadurch gekennzeichnet, dass ein Steuerelement vorgesehen ist, das mit der Kraftstoffdüse, dem elektrischen Heizwiderstand, dem Magnetventil, dem Einlassventil, dem Temperaturfühler, dem Mengenmesser, Stellmotor und dem Druckfühler verbunden ist.

Die Vorrichtung ist besonders kompakt, wenn das Heizelement, der elektrische Heizwiderstand, die Kraftstoffeinspritzdüse, das Magnetventil, der Einlasskanal, das Einlassventil und die Einlassdüse eine Einheit bilden.

Die Erfindung betrifft auch ein Verfahren gemäß Anspruch 13 zur Vergasung eines Kraftstoff-Wasser-Gemisches, das dadurch gekennzeichnet ist, dass das Kraftstoff-Wasser-Gemisch in ein Heizelement eingedüst, vergast und anschließend direkt vor die Zündkerze einer Brennkammer gesprüht wird.

Bei hohem Wasseranteil hat es sich gezeigt, dass das Kraftstoff-Wasser-Gemisch vorteilhaft bei einer Temperatur von 250 °C bis 1000 °C vergast wird.

Wird z.B. Diesel eingesetzt ist es besonders günstig, wenn das Kraftstoff-Wasser-Gemisch bei einer Temperatur von 40 °C bis 200 °C vergast wird.

Die erfindungsgemäße Vorrichtung besteht aus einem geschlossenem Heizelement (10) mit einer Kraftstoffeinspritzdüse (1) und einem Magnetventil (3), einem Temperaturfühler (5), einem Mengenmessser (6) und einem Einlassventil (4) welches elektronisch durch ein Magnetventil (4) oder mechanisch durch einen Stellmotor (9) geregelt wird. Diese Vorrichtung wird durch ein Steuergerät (8), welches computerisiert ist, geregelt und kontrolliert Diese Elemente zusammengenommen bilden eine Einheit, die austauschbar ist.

Das Kraftstoff-Wassergemisch bildet eine Lösung, welche durch eine Einspritzdüse (1) in das sogenannte Heizelement (10) welches einen elektrischen Heizwiderstand (2) aufweist und durch ein Steuergerät (8) kontrolliert und gesteuert eingespritzt wird. Der in diesem Heizelement (10) vergaste Kraftstoff gelangt nunmehr durch ein Magnetventil (3) welche das Heizelement (10) verschließt oder öffnet zum Einlassventil (4) dieser Vorrichtung. Dieses Einlassventil (4) ist mit dem Steuergerät (8) der Brennkraftmaschine verbunden und wird mittels diesem so gesteuert, dass die Einlasszeiten sowie die Einlassmengen optimal für den Betrieb der fremdgezündeten Brennkraftmaschine abgestimmt werden. Dies geschieht mittels Mengenmesser(6) im Einlasskanal (1). Das Einlassventil (4) kann sehr wohl durch ein elektrisches, computergesteuertes Magnetventil (4) sowie auch mechanisch durch einen computergesteuerten Stellmotor (9) das Öffnen und das Schließen dieser Einlassdüse (12), welche ein Bestandteil der Vorrichtung ist, in einem Bruchteil einer Sekunde bewirken. Der Einsprühstrahl des vergasten Kraftstoffes wird direkt zur Hochleistungszündkerze (7) mit einem verstärktem Zündfunken gerichtet. Dadurch wird für ein Optimum der Kraftstoffnutzung sowie der Explosion und der Verbrennung gesorgt. Dies bedeutet wiederum weniger Kraftstoffverbrauch, weniger Schadstoffe und durch das Verwenden eines Kraftstoff- Wassergemisches welches unter anderem auch Wasser-Menthanol sein kann wird der Schadstoff auf Null reduziert. Auch an Wasser - Ethanol ist gedacht welches aus der Biomasse kommt und somit keine Schadstoffe produziert. Diese Erfindung hat den Vorteil das man ein jedes Wasserkraftstoffgemisch u. Kraftstoff in diesem Heiz Element (10) vergast und somit einen umweltfreundlichen Betrieb einer fremdgezündeten, gemischverdichteten Brennkraftmaschine gewährleistet. Sowie der Verbrauch als auch die Leistung werden optimiert was natürlich einen sehr wichtigen Aspekt auf den Wirkungsgrad hat.

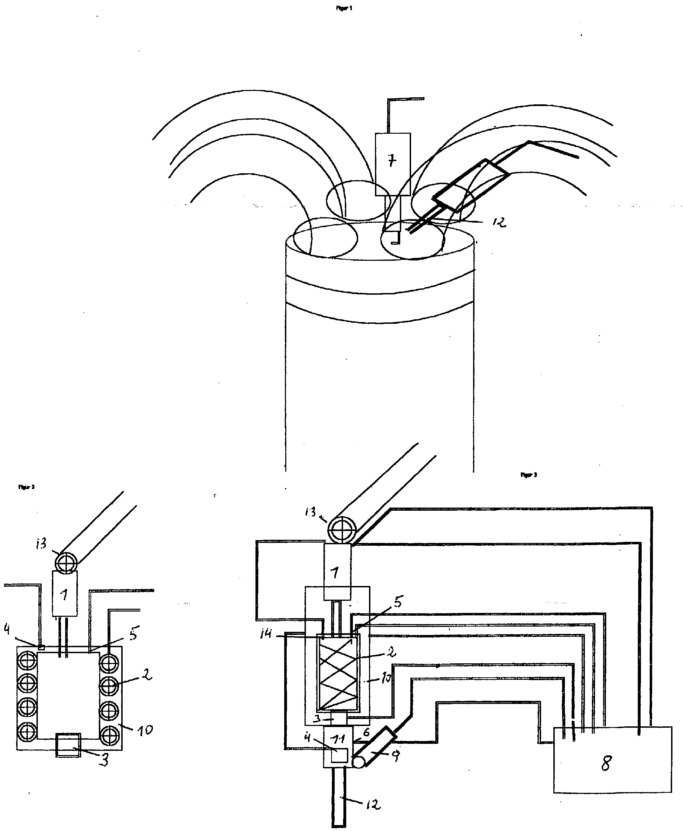

In der Zeichnung ist eine Ausführungsform der Erfindung dargestellt. Durch den Kraftstoffverteiler (13) gelangt das Kraftstoffgemisch zur Kraftstoffeinspritzdüse (1). Mittels dieser gelangt der Kraftstoff in das Heizelement (10). Dieses Heizelement (10) welches eine mit elektrischen Heizwiderständen (Dioden) (2) versehene geschlossene Kammer ist, einer Kraftstoffeinspritzdüse (1) sowie einem Magnetventil (3), einem Temperaturfühler (5) welcher die Aufgabe hat die Temperatur so zu regeln, dass diese mindest 200° bis 1000° Grad Celsius liegt. Temperatur und der Druck werden mittels eines Steuergeräts (8), an welchem auch der Druckfühler(14) angeschlossen ist, kontrolliert und geregelt. Das in dem Heizelement (10) vergaste Kraftstoffgemisch gelangt nun mittels Magnetventil (3) aus dieser Kammer zum Einlasskanal (11) in dem sich der Mengenmesser (6) befindet.

Das computergesteuerte Einlassventil (4) sorgt für die optimale Kraftstoffmenge durch gesteuerte Einlasszeiten. Diese Einlassmenge wird außerdem noch mittels Mengenmesser (6) im Einlasskanal (11) kontrolliert. Das Einlassventil (4) kann durch ein elektrisches, computergesteuertes Magnetventil sowie auch mechanisch durch einen wiederum computergesteuerten Stellmotor (9) betätigt werden. Durch die Einlassdüse (12) gelangt das vergaste Kraftstoff-Wassergemisch nun direkt in die Brennkammer, wo der Einsprühstrahl so gerichtet ist, dass er direkt auf die Zündkerze (7) aufprallt. Durch das direkte Einsprühen des vergasten Kraftstoffes wird für eine effiziente Verbrennung dank der Hochleistungskerze (7) gesorgt. Durch dieses System wird eine neue Motorengeneration geboren. Ohne Schadstoffe und mit einem optimalen Verbrauch nach Leistung.

### Zeichenerklärung:

- 1: Kraftstoffeinspritzdüse
- 2: Heizdioden, Heizwiderstände
- 3: Magnetventil (Hochdruckventil)
- 4: Einlassventil
- 5: Temperaturfühler
- 6: Mengenmesser
- 7: Hochleistungszündkerze
- 8: Steuerelement (Computer)
- 9: Stellmotor
- 10: Heizelement
- 11: Einlasskanal
- 12: Einlassdüse
- 13: Kraftstoffverteiler
- 14: Druckmesser

## Patentansprüche

1. Vorrichtung zur Vergasung eines Kraftstoff-Wasser-Gemisches, **dadurch gekennzeichnet, dass** die Vorrichtung aus einem geschlossenem Heizelement (10) besteht, das einen elektrischen Heizwiderstand (2) aufweist und mit einer Kraftstoffeinspritzdüse (1), mittels derer das Gemisch in das Heizelement gelangt, und einem Magnetventil (3) versehen ist, wobei an das Magnetventil (3) ein Einlasskanal (11) mit einem Einlassventil (4) und einer Einlassdüse (12) anschließt, wodurch das Gemisch direkt vor die Zundkerze einer Brennkraftmaschine gesprüht wird.

2. Vorrichtung nach Anspruch 1, **dadurch gekennzeichnet, dass** die Heizkammer (10) einen Temperaturfühler (5) aufweist.

3. Vorrichtung nach Anspruch 1 oder 2, **dadurch gekennzeichnet, dass** die Heizkammer einen Druckfühler (14) aufweist.

4. Vorrichtung nach einem der Ansprüche 1 bis 3, **dadurch gekennzeichnet, dass** im Einlasskanal (11) ein Mengenmesser (6) vorgesehen ist

5. Vorrichtung nach einem der Ansprüche 1 bis 4, **dadurch gekennzeichnet, dass** die Einlassdüse (12) in unmittelbarer Nähe der Zündkerze (7) einer Brennkammer einer Brennkraftmaschine wie z.B. Ottomotor, Dieselmotor, Wankelmotor oder einer Turbine mündet.

6. Vorrichtung nach einem der Ansprüche 1 bis 5, **dadurch gekennzeichnet, dass** der elektrische Heizwiderstand (2) in den Wänden des Heizelementes (10) angeordnet ist.

7. Vorrichtung nach einem der Ansprüche 1 bis 5, **dadurch gekennzeichnet, dass** der elektrische Heizwiderstand (2) im Innenraum des Heizelementes (10) vorgesehen ist und beispielsweise ein Raster oder Netz bildet.

8. Vorrichtung nach einem der Ansprüche 1 bis 7, **dadurch gekennzeichnet, dass** sie aus Edelstahl, Stahl, Leichtmetall oder aus jeder Art von Metalllegierung sowie aus Keramik oder Kalzium bestehen kann.

9. Vorrichtung nach einem der Ansprüche 1 bis 8, **dadurch gekennzeichnet, dass** das Einlassventil (4) durch ein Magnetventil betätigt wird

10. Vorrichtung nach einem der Ansprüche 1 bis 8, **dadurch gekennzeichnet, dass** das Einlassventil (4) durch einen Stellmotor (9) betätigt wird.

11. Vorrichtung nach einem der Ansprüche 1 bis 10, **dadurch gekennzeichnet, dass** ein Steuerelement (8) vorgesehen ist, das mit der Kraftstoffdüse (1), dem elektrischen Heizwiderstand (2), dem Magnetventil (3), dem Einlassventil (4), dem Temperatur-fühler (5), dem Mengenmesser (6), Stellmotor (9) und dem Druckfühler (14) verbunden ist.

12. Vorrichtung nach Anspruch 1 bis 11, **dadurch gekennzeichnet, dass** das Heizelement (10), der elektrische Heizwiderstand (2), die Kraftstoffeinspritzdüse (1), das Magnetventil (3), der Einlasskanal (11), das Einlassventil (4) und die Einlassdüse (12) eine Einheit bilden.

13. Verfahren zur Vergasung eines Kraftstoff-Wasser-Gemisches, **dadurch gekennzeichnet, dass** das Kraftstoff-Wasser-Gemisch in ein geschlossenes Heizelement (10) mittels einer Kraftstoffeinspritzdüse (1) eingedüst, vergast und anschließend über ein Magnetventil (3), ein Einlaßkanal (11) mit einem Einlaßventil (4) und einer Einlaßdüse (12) direkt vor die Zündkerze einer Brennkammer gesprüht wird.

14. Verfahren nach Anspruch 13, **dadurch gekennzeichnet, dass** das Kraftstoff-Wasser-Gemisch bei einer Temperatur von 250 °C bis 1000 °C vergast wird.

15. Verfahren nach Anspruch 13, **dadurch gekennzeichnet, dass** das Kraftstoff-Wasser-Gemisch bei einer Temperatur von 40 °C bis 200 °C vergast wird.

## Claims

1. A device for the gasification of a fuel-water mixture, **characterized in that** the device consists of a closed heating element (10), which has an electrical heating resistor (2) and with a fuel injection nozzle (1) by means of which the mixture arrives into the heating element, and is provided with an electromagnetic valve (3), wherein an inlet channel (11) with an inlet valve (4) and with an inlet nozzle (12) adjoins the electromagnetic valve (3), whereby the mixture is injected directly in front of the spark plug of an internal combustion engine.

2. The device according to Claim 1, **characterized in that** the heating chamber (10) has a temperature sensor (5).

3. The device according to Claim 1 or 2, **characterized in that** the heating chamber has a pressure sensor (14).

4. The device according to one of Claims 1 to 3, **characterized in that** a flow meter (6) is provided in the inlet channel (11).

5. The device according to one of Claims 1 to 4, **characterized in that** the inlet nozzle (12) opens in the immediate vicinity of the spark plug (7) of a combustion chamber of an internal combustion engine such as e.g. an Otto engine, diesel engine, Wankel engine or a turbine.

6. The device according to one of Claims 1 to 5, **characterized in that** the electrical heating resistor (2) is arranged in the walls of the heating element (10).

7. The device according to one of Claims 1 to 5, **characterized in that** the electrical heating resistor (2) is provided in the interior of the heating element (10) and forms for example a grid or network.

8. The device according to one of Claims 1 to 7, **characterized in that** it can consist of high-grade steel, steel, light metal or of any type of metal alloy and of ceramic or calcium.

9. The device according to one of Claims 1 to 8, **characterized in that** the inlet valve (4) is actuated by an electromagnetic valve.

10. The device according to one of Claims 1 to 8, **characterized in that** the inlet valve (4) is actuated by a servomotor (9).

11. The device according to one of Claims 1 to 10, **characterized in that** a control element (8) is provided, which is connected with the fuel nozzle (1), the electrical heating resistor (2), the electromagnetic valve (3), the inlet valve (4), the temperature sensor (5), the flow meter (6), the servomotor (9) and the pressure sensor (14).

12. The device according to Claim 1 to 11, **characterized in that** the heating element (10), the electrical heating resistor (2), the fuel injection nozzle (1), the electromagnetic valve (3), the inlet channel (11), the inlet valve (4) and the inlet nozzle (12) form one unit.

13. A method for the gasification of a fuel-water mixture, **characterized in that** the fuel-water mixture is injected into a closed heating element (10) by means of a fuel injection nozzle (1), is gasified and is subsequently sprayed directly in front of the spark plug of a combustion chamber via an electromagnetic valve (3), an inlet channel (11) with an inlet valve (4) and an inlet nozzle (12).

14. The method according to Claim 13, **characterized in that** the fuel-water mixture is gasified at a temperature of 250 °C to 1000 °C.

15. The method according to Claim 13, **characterized in that** the fuel-water mixture is gasified at a temperature of 40 °C to 200 °C.

## Revendications

1. Dispositif pour gazéifier un mélange carburant-eau **caractérisé en ce que** le dispositif est composé d'un élément chauffant (10) fermé qui comporte une résistance chauffante (2) électrique et avec un injecteur de carburant (1) au moyen duquel le mélange parvient dans l'élément chauffant et est muni d'une électrovanne (3), un conduit d'admission (11) avec une soupape d'admission (4) et une buse d'admission (12) étant raccordé à l'électrovanne (3), par lequel le mélange est pulvérisé directement devant la bougie d'allumage d'un moteur à combustion interne.

2. Dispositif selon la revendication 1, **caractérisé en ce que** la chambre de chauffage (10) comporte un capteur de température (5).

3. Dispositif selon la revendication 1 ou 2, **caractérisé en ce que** la chambre de chauffage comporte un capteur de pression (14).

4. Dispositif selon une quelconque des revendications 1 ou 3, **caractérisé en ce qu'**un débitmètre (6) est prévu dans le conduit d'admission (11).

5. Dispositif selon une quelconque des revendications 1 à 4, **caractérisé en ce que** la buse d'admission (12) débouche à proximité immédiate de la bougie d'allumage (7) d'une chambre de combustion d'un moteur à combustion interne comme par ex.: un moteur à explosion, un moteur Diesel, un moteur à piston rotatif ou une turbine.

6. Dispositif selon une quelconque des revendications 1 à 5, **caractérisé en ce que** la résistance chauffante électrique (2) est disposée dans les parois de l'élément chauffant (10).

7. Dispositif selon une quelconque des revendications 1 à 5, **caractérisé en ce que** la résistance chauffante électrique (2) est prévue à l'intérieur de l'élément chauffant (10) et forme par exemple une grille ou un réseau.

8. Dispositif selon une quelconque des revendications 1 à 7, **caractérisé en ce qu'**il peut être en acier inoxydable, acier, métal léger ou de tout type d'alliage métallique ainsi qu'en céramique ou calcium.

9. Dispositif selon une quelconque des revendications 1 à 8, **caractérisé en ce que** la soupape d'admission (4) est actionnée par une électrovanne.

10. Dispositif selon une quelconque des revendications 1 à 8, **caractérisé en ce que** la soupape d'admission (4) est actionnée par un servomoteur (9).

11. Dispositif selon une quelconque des revendications 1 à 10, **caractérisé en ce qu'**un élément de commande (8) est prévu qui est raccordé à l'injecteur de carburant (1), la résistance chauffante électrique (2), l'électrovanne (3), la soupape d'admission (4), le capteur de température (5), le débitmètre (6), le servomoteur (9) et le capteur de pression (14).

12. Dispositif selon une quelconque des revendications 1 à 11, **caractérisé en ce que** l'élément chauffant (10), la résistance chauffante électrique (2), l'injecteur de carburant (1), l'électrovanne (3), le conduit d'admission (11), la soupape d'admission (4) et la buse d'admission (12) forment une unité.

13. Procédé de gazéification d'un mélange carburant-eau **caractérisé en ce que** le mélange carburant-eau est injecté, gazéifié dans un élément chauffant (10) fermé au moyen d'injecteur de carburant (1) et ensuite pulvérisé par une électrovanne (3), un conduit d'admission (11) avec une soupape d'admission (4) et une buse d'admission (12), directement devant la bougie d'allumage d'une chambre de combustion.

14. Procédé selon la revendication 13, **caractérisé en ce que** le mélange carburant-eau est gazéifié à une température de 250° C à 1000° C.

15. Procédé selon la revendication 13, **caractérisé en ce que** le mélange carburant-eau est gazéifié à une température de 40° C à 200° C.
